# EUROPÄISCHE PATENTANMELDUNG

(11) **EP 4 261 629 A1**
(43) Veröffentlichungstag der Anmeldung: **18.10.2023**
(21) Anmeldenummer: 22167930.1
(22) Anmeldetag: 12.04.2022
(51) Int. Cl.: G05B 19/042, G05B 23/02

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (16) für eine technische Anlage, insbesondere Fertigungs- oder Prozessanlage, das dazu ausgebildet ist, wenigstens eine Referenz ("Bild_ÜbersichtAnlage", "Bild_ÜbersichtTeilanlagel", "Bild_Tank1", "Bild_ÜbersichtTeilanlage2" und "Bild_Tank2") auf ein Anlagenbild (2, 3, 4, 5, 6) visuell darzustellen, wobei das Anlagenbild (2, 3, 4, 5, 6) die technische Anlage oder einen Teil der technischen Anlage für ein Bedienen und Beobachten der technischen Anlage repräsentiert.

Das Leitsystem (16) ist dadurch gekennzeichnet, dass es dazu ausgebildet ist, die visuelle Darstellung der Referenz ("Bild_ÜbersichtAnlage", "Bild_ÜbersichtTeilanlagel", "Bild_Tank1", "Bild_ÜbersichtTeilanlage2" und "Bild_Tank2") auf das Anlagenbild (2, 3, 4, 5, 6) in Abhängigkeit einer vorgebbaren Bedingung für den Fall, dass die Bedingung erfüllt ist, automatisiert zu unterbrechen.

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems für eine technische Anlage.

Für die Bedienung und Beobachtung verfahrenstechnischer Anlagen werden Operatoren dynamisierte Anlagenbilder und unterschiedliche grafische Ansichten zur Darstellung von Trendverläufen, Alarmsequenzen oder Zuständen von Prozessobjekten angeboten. Anlagenbilder sind zur Laufzeit in einer so genannten Anlagenbildhierarchie strukturiert, so dass ein Operator effizient zwischen den Anlagenbildern navigieren kann. Die Strukturierung der Anlagenbilder in Anlagenbildhierarchien erfolgt über einen Anlagenbildhierarchie-Editor im Engineering. Die Anlagenbildhierarchien sind nach dem Stand der Technik statisch - d.h. sind die Anlagenbilder in der Anlagenbildhierarchie auf den Operator Station Servern verfügbar, werden sie dem Operator auch entsprechend angeboten. Auch dann, wenn auf Grund eines Systemzustandes ein Anlagenbild für die Bedienung und Beobachtung ungeeignet ist, weil z.B. gerade eine Package Unit im laufenden Betrieb ausgetauscht wird, eine Wartung stattfindet, ein Hochlauf im Gange ist, usw.

Es gibt also zahlreiche Gründe, bestimmte Anlagenbilder und bestimmten Voraussetzung den Operatoren vorzuenthalten, um eine effiziente Bedienung und Beobachtung zu ermöglichen, zumal auch jedes Anlagenbild in der Anlagenbildhierarchie mit einem Alarmstatus angezeigt wird, der - falls aktiv - den Operator zu unmittelbarem Handeln - auch wenn gerade nicht notwendig - animiert.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch ein Verfahren zum Betreiben eines Leitsystems für eine technische Anlage gemäß Anspruch 9. Vorteilhafte Weiterbildungen ergeben sich aus den abhängigen Ansprüchen.

Ein erfindungsgemäßes Leitsystem für eine technische Anlage, insbesondere Fertigungs- oder Prozessanlage, ist dazu ausgebildet, wenigstens eine Referenz auf ein Anlagenbild visuell darzustellen, wobei das Anlagenbild die technische Anlage oder einen Teil der technischen Anlage für ein Bedienen und Beobachten der technischen Anlage repräsentiert.

Das erfindungsgemäße Leitsystem ist dadurch gekennzeichnet, dass das Leitsystem dazu ausgebildet ist, die visuelle Darstellung der Referenz auf das Anlagenbild in Abhängigkeit einer vorgebbaren Bedingung für den Fall, dass die Bedingung erfüllt ist, automatisiert zu unterbrechen.

Im Falle einer Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Für den Fall, dass die vorgebbare Bedingung erfüllt ist, unterbricht das erfindungsgemäße Leitsystem in besonders vorteilhafter Weise automatisiert die visuelle Darstellung der Referenz auf das betroffene Anlagenbild. Dadurch lässt sich die Effizienz des Bedienens und Beobachtens der technischen Anlage durch einen Operator vereinfachen. Dem Operator stehen zur Laufzeit nur die Referenzen auf Anlagenbilder zur Verfügung, die sie situationsbedingt für eine Bedienung und Beobachtung verwenden sollten.

Bevorzugt ist das Leitsystem dazu ausgebildet, die visuelle Darstellung der Referenz auf das Anlagenbild und zusätzlich einer weiteren Referenz auf ein weiteres, mit dem Anlagenbild in Verbindung stehendes Anlagenbild zu unterbrechen. Das (erste) Anlagenbild und der oder die weiteren Anlagenbilder, die mit dem (ersten) Anlagenbild in Verbindung stehen, können beispielsweise eine in sich geschlossene Einheit repräsentieren, wobei für den Fall, dass die Bedingung eintritt (beispielsweise die Wartung der Einheit), die Referenz auf das Anlagenbild der Einheit mitsamt dazu gehöriger Teile visuell nicht mehr dargestellt werden.

Die Verbindung des wenigstens einen weiteren Anlagenbildes zu dem Anlagenbild kann eine hierarchische Unterordnung des weiteren Anlagenbildes zu dem Anlagenbild darstellen. Die hierarchische Unterordnung des weiteren Anlagenbildes ist dabei bevorzugt aus einer verfahrenstechnischen Topologie der als verfahrenstechnische Anlage ausgebildeten technischen Anlage abgeleitet. Dies kann bedeuten, dass beispielsweise alle Referenzen auf diejenigen Anlagenbilder nicht mehr visuell dargestellt werden, die einem übergeordneten Anlagenbild verfahrenstechnisch untergeordnet sind.

Bedingungen für das automatisierte Unterbrechen der visuellen Darstellung der Referenz auf das Anlagenbild (oder auf nachgeordnete Anlagenbilder) können beispielsweise das Über- oder Unterschreiten eines Schwellwertes eines Messwertes oder das Aufkommen einer Alarmmeldung in der technischen Anlage darstellen. Als Bedingung kann auch ein bestimmter Status ("defekt", "außer Betrieb", "Warnung" etc.) eines Objektes der technischen Anlage verwendet werden.

Im Rahmen einer vorteilhaften Weiterbildung der Erfindung ist das Leitsystem dazu ausgebildet, zusätzlich zu der visuellen Darstellung der Referenz auf das Anlagenbild auch eine visuelle Darstellung weiterer, dem Anlagenbild zugeordneter Elemente automatisiert zu unterbrechen. Ein solches weiteres Element kann beispielsweise eine Alarmanzeige (beispielsweise eines Gruppenalarms) in einer Alarmübersicht darstellen. Dadurch wird der Operator nicht unnötig durch das Aufkommen eines zu vernachlässigenden Alarms belastet.

Besonders bevorzugt umfasst das Leitsystem einen Engineering Station Server, durch den die Bedingung für die Unterbrechung der visuellen Darstellung im Rahmen einer Projektierung einer Automatisierung der technischen Anlage vorgebbar ist, und wobei das Leitsystem einen Operator Station Server zum Erzeugen von Visualisierungsinformationen für ein Bedienen und Beobachten der technischen Anlage auf Grundlage der von dem Engineering Station Server empfangenen Projektierung aufweist, und wobei das Leitsystem einen Operator Station Client zur visuellen Darstellung der von dem Operator Station Server erzeugten Visualisierungsinformationen aufweist.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Unter einem "Engineering Station Server" wird vorliegend ein Server verstanden, der dazu ausgebildet ist, verschiedene Hardware- und Software-Projekte für ein Prozessleitsystem einer technischen Anlage zu erstellen, verwalten, archivieren und dokumentieren. Mithilfe von speziellen Software-Projektierungswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Die zuvor formulierte Aufgabe wird zudem gelöst durch ein Verfahren zum Betreiben eines Leitsystems für eine technische Anlage, insbesondere Fertigungsanlage oder Prozessanlage, umfassend:
a) Vorgeben einer Bedingung,
b) Visuelle Darstellung einer Referenz auf ein Anlagenbild der technischen Anlage,
c) Für den Fall, dass die Bedingung erfüllt ist, automatisiertes Unterbrechen der visuellen Darstellung der Referenz auf das Anlagenbild.
Zusammen mit der visuellen Darstellung der Referenz auf das Anlagenbild kann zusätzlich die visuelle Darstellung wenigstens einer Referenz auf ein weiteres, mit dem Anlagenbild in Verbindung stehendes Anlagenbild unterbrochen werden.

Bevorzugt stellt die Verbindung des wenigstens einen weiteren Anlagenbildes zu dem Anlagenbild eine hierarchische Unterordnung des weiteren Anlagenbildes zu dem Anlagenbild dar, wobei die hierarchische Unterordnung des weiteren Anlagenbildes vorzugsweise aus einer verfahrenstechnischen Topologie der als verfahrenstechnische Anlage ausgebildeten technischen Anlage abgeleitet ist.

Besonders bevorzugt wird zusätzlich zu der visuellen Darstellung der Referenz auf das Anlagenbild auch eine visuelle Darstellung weiterer, dem Anlagenbild zugeordneter Elemente automatisiert unterbrochen. Das weitere Element stellt dabei vorteilhafterweise eine Alarmanzeige dar.

Im Rahmen einer vorteilhaften Weiterbildung der Erfindung stellt eine Bedingung das Über- oder Unterschreiten eines Schwellwertes eines Messwertes oder das Aufkommen einer Alarmmeldung in der technischen Anlage dar.

Die Bedingung für die Unterbrechung der visuellen Darstellung kann im Rahmen einer Projektierung einer Automatisierung der technischen Anlage auf einem Engineering Station Server des Leitsystems vorgegeben werden, wobei ein Operator Station Server des Leitsystems Visualisierungsinformationen für ein Bedienen und Beobachten der technischen Anlage auf Grundlage der von dem Engineering Station Server empfangenen Projektierung erzeugt, und wobei ein Operator Station Client des Leitsystems die visuelle Darstellung der von dem Operator Station Server erzeugten Visualisierungsinformationen vornimmt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine grafische Nutzeroberfläche zur Festlegung von Bedingungen für eine Unterbrechung einer visuellen Darstellung einer oder mehrerer Referenzen auf Anlagenbilder;
- FIG 2A-C: Beispiele für ein Ausblenden von Referenzen auf Anlagenbilder anhand einer Übersichtsanzeige der Referenzen auf die Anlagenbilder;
- FIG 3: eine grafische Nutzeroberfläche zur Bedienung und Beobachtung einer technischen Anlage; und
- FIG 4: ein erfindungsgemäßes Leitsystem in einer schematischen Darstellung.

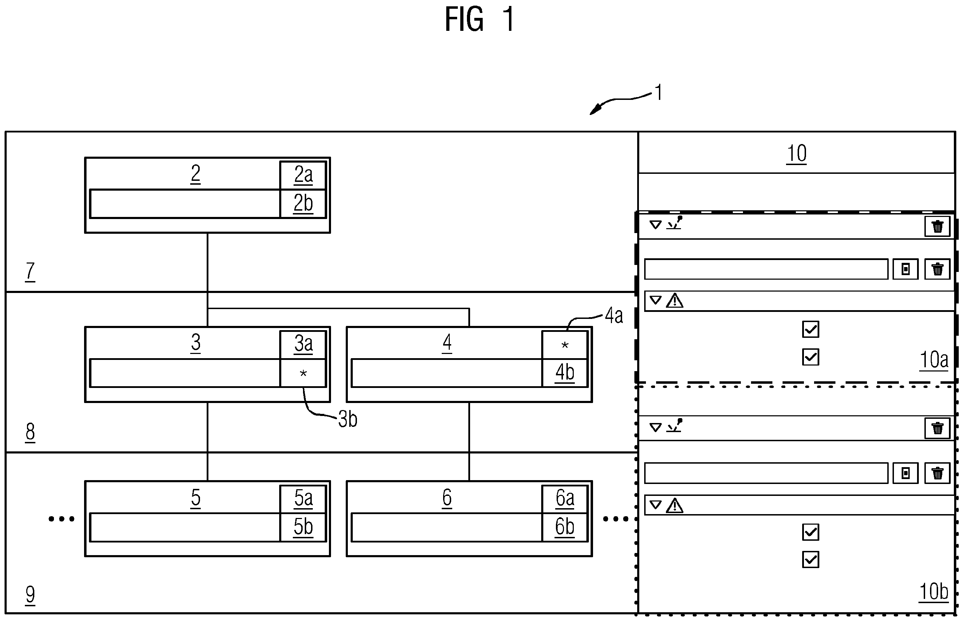

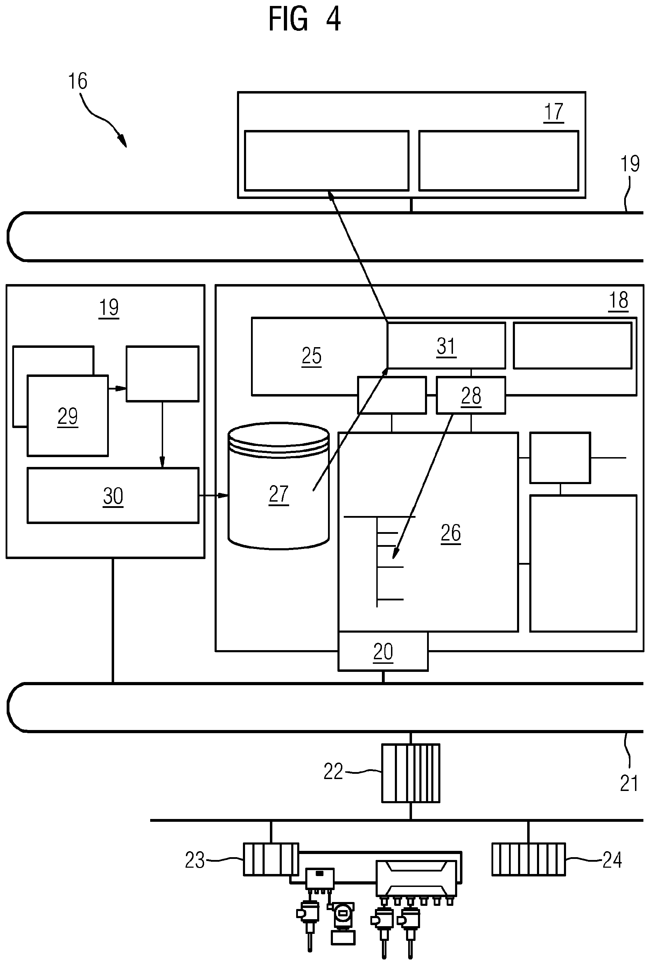

In FIG 1 ist eine grafische Nutzeroberfläche 1 eines Projektierungswerkzeuges für eine Automatisierung einer technischen Anlage dargestellt. Das Projektierungswerkzeug kann auf einem Engineering Station Server eines Leitsystems für die technische Anlage computerimplementiert sein (vgl. Beschreibung von FIG 4). Auf einer linken Seite der FIG 1 sind fünf Blöcke dargestellt, die jeweils Anlagenbilder 2, 3, 4, 5, 6 repräsentieren. Die Anlagenbilder 2, 3, 4, 5, 6, sind auf einer ersten hierarchischen Ebene 7, einer zweiten hierarchischen Ebene 8 und auf einer dritten hierarchischen Ebene 9 angeordnet.

Ein Block eines ersten Anlagenbildes 2 befindet sich auf der ersten (obersten) hierarchischen Ebene 7 und weist eine Verbindung zu einem Block eines zweiten Anlagenbild 3 und zu einem Block eines dritten Anlagenbildes 4 auf, die beide auf der zweiten (mittleren) hierarchischen Ebene 8 angeordnet sind. Der Block des zweiten Anlagenbildes 3 ist wiederum mit einem Block eines vierten Anlagenbildes 5 und der Block des dritten Anlagenbildes 4 mit einem Block eines fünften Anlagenbildes 6 verbunden, die beide auf der dritten (untersten) hierarchischen Ebene 9 angeordnet sind.

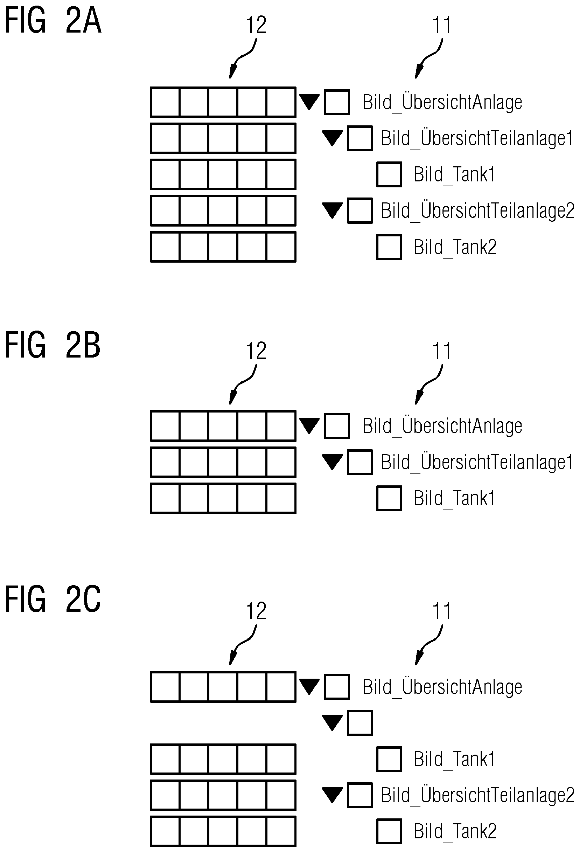

Jeder Block jedes Anlagenbildes 2, 3, 4, 5, 6 weist jeweils ein Auswahlfeld 2a, 3a, 4a, 5a, 6a für einen Knotenaspekt und ein Auswahlfeld 2b, 3b, 4b, 5b, 6b für einen Bildaspekt auf. Auf der rechten Seite von FIG 1 ist ein Bearbeitungsbereich 10 für die einzelnen Aspekte der Blöcke der Anlagenbilder 2, 3, 4, 5, 6 dargestellt. Wählt ein Benutzer des Projektierungswerkzeuges beispielsweise das Auswahlfeld 4a für einen Knotenaspekt des dritten Anlagenbildes 4 aus (symbolisiert durch einen Stern in dem Auswahlfeld 4a), wird ihm ein erster Teil 10a des Bearbeitungsbereichs 10 zur Bearbeitung angeboten. In diesem Teil 10a legt der Benutzer fest, welche Bedingung dazu führt, dass bei deren Vorliegen eine Referenz auf das dritte Anlagenbild 4 automatisiert von dem Leitsystem ausgeblendet wird, d.h. eine visuelle Darstellung der Referenz auf das dritte Anlagenbild 4 unterbrochen wird (bezüglich der Erläuterung der Referenz sei auf FIG 2 verwiesen). In diesem Fall hat der Benutzer den Knotenaspekt des dritten Anlagenbildes 4 ausgewählt. Dies bedeutet, dass nicht nur die Referenz auf das dritte Anlagenbild 4 ausgeblendet wird, sondern auch eine Referenz auf das hierarchische unterlagerte fünfte Anlagenbild 6.

Wählt der Benutzer in einem weiteren Beispiel das Auswahlfeld 3b für einen Bildaspekt des zweiten Anlagenbildes 3 aus (symbolisiert durch einen Stern), wird ihm ein zweiter Teil 10b des Bearbeitungsbereichs 10 zur Bearbeitung angeboten. In diesem Teil 10b legt der Benutzer fest, welche Bedingung dazu führt, dass bei deren Vorliegen eine Referenz auf das zweite Anlagenbild 3 automatisiert von dem Leitsystem ausgeblendet wird, d.h. eine visuelle Darstellung der Referenz auf das zweite Anlagenbild 3 unterbrochen wird. In diesem Fall hat der Benutzer den Bildaspekt des zweiten Anlagenbildes 3 ausgewählt. Dies bedeutet, dass nur die Referenz auf das zweite Anlagenbild 3 ausgeblendet wird, während eine Referenz auf das hierarchische unterlagerte vierte Anlagenbild 5 weiterhin visuell dargestellt wird.

Bedingungen für das automatisierte Unterbrechen der visuellen Darstellung der Referenzen auf die Anlagenbilder 2, 3, 4, 5, 6 (oder nachgeordneter Anlagenbilder) können beispielsweise das Über- oder Unterschreiten eines Schwellwertes eines Messwertes oder das Aufkommen einer Alarmmeldung in der technischen Anlage darstellen, ohne sich jedoch hierauf zu beschränken. Als Bedingung kann auch ein bestimmter Status ("defekt", "außer Betrieb", "Warnung" etc.) eines Objektes der technischen Anlage verwendet werden.

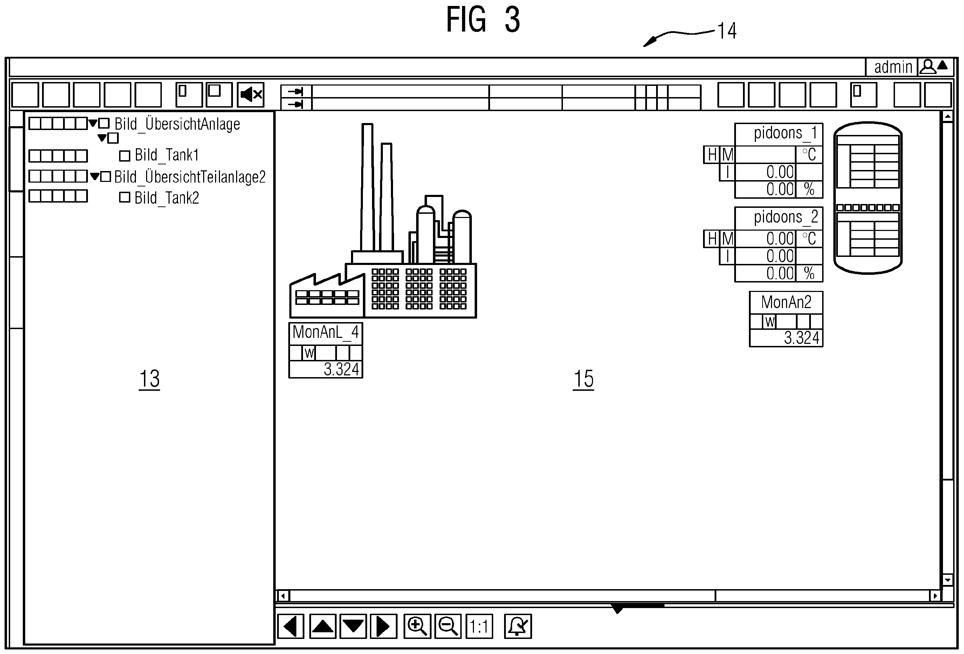

In FIG 2A-C sind drei Beispiele für in einer sogenannten Anlagenbildhierarchie 13 hierarchisch angeordnete Referenzen auf Anlagenbilder 2, 3, 4, 5, 6 dargestellt. Die Anlagenbildhierarchie 13 ist üblicherweise Teil einer umfassenderen visuellen Darstellung durch den Operator Station Client des Leitsystems (vgl. FIG 3). Die Referenzen befinden sich auf einer rechten Seite 11 der FIG 2A-C und weisen die folgenden Bezeichnungen auf: "Bild_ÜbersichtAnlage", "Bild_ÜbersichtTeilanlage1", "Bild_Tank1", "Bild_ÜbersichtTeilanlage2" und "Bild_Tank2". Auf einer linken Seite 12 der FIG 2A-C ist jeweils eine (Gruppen)Alarmanzeige dargestellt, die einem jeweiligen Anlagenbild 2, 3, 4, 5, 6 zugeordnet ist.

In FIG 2A ist keine Bedingung für eine Unterbrechung einer visuellen Darstellung einer Referenz auf eines der Anlagenbilder 2, 3, 4, 5, 6 erfüllt. Alle Referenzen "Bild_ÜbersichtAnlage", "Bild_ÜbersichtTeilanlage1", "Bild-Tank1", "Bild_ÜbersichtTeilanlage2" und "Bild_Tank2" werden von dem Operator Station Client visuell dargestellt. Die zugehörigen (Gruppen-)Alarmanzeigen auf der linken Seite 12 der Anlagenbildhierarchie 13 werden entsprechend dargestellt.

In FIG 2B ist der Fall verdeutlicht, dass die vorherbestimmte Bedingung für die Unterbrechung der visuellen Darstellung der Referenz "Bild_ÜbersichtTeilanlage2" und der Referenz "Bild_Tank2" erfüllt ist, so dass die beiden Referenzen "Bild_ÜbersichtTeilanlage2" und "Bild_Tank2" nicht in der Anlagenbildhierarchie 13 visuell dargestellt werden. Der Operator kann die Referenzen "Bild_ÜbersichtTeilanlage2" und "Bild_Tank2" nicht anwählen, um die damit referenzierten Anlagenbilder 2, 3, 4, 5, 6, zu öffnen.

In FIG 2C ist der Fall skizziert, dass nur die Referenz "Bild_ÜbersichtTeilanlage1" ausgeblendet wird, während die hierarchisch untergeordnete Referenz "Bild_Tank1" weiterhin sichtbar ist. Es müssen demnach nicht zwangsläufig alle einer ausgeblendeten Referenz untergeordneten Referenzen mit ausgeblendet werden. Vielmehr kann der Benutzer des Projektierungswerkzeuges selektiv die einzelnen Referenzen festlegen, deren visuelle Darstellung für den Fall, dass die vorherbestimmte Bedingung erfüllt sein sollte, unterbrochen werden soll.

FIG 3 zeigt eine grafische Nutzeroberfläche 14 zur Bedienung und Beobachtung einer technischen Anlage. Die Nutzeroberfläche weist eine Anlagenbildhierarchie 13 auf, die wie zuvor anhand FIG 2C beschreiben ausgebildet ist. Auf der rechten Seite von FIG 3 ist ein Anlagenbild 15 zu erkennen, welches einem Operator zur Bedienung und Beobachtung der technischen Anlage (hier einer verfahrenstechnischen Anlage) visuell dargeboten wird. Durch das explizite Ausblenden der Referenz "Bild_ÜbersichtTeilanlage1" auf das dazugehörige Anlagenbild 2, 3, 4, 5, 6 bleibt die eigentliche Struktur der Anlagenbildhierarchie 13 erhalten, d.h. untergeordnete Anlagenbilder 3, 4, 5, 6, 7 können weiterhin bedient und beobachtet werden. Mit der ausgeblendeten Referenz "Bild_ÜbersichtTeilanlage1" auf das Anlagenbild 2, 3, 4, 5, 6 wird auch das Alarmmanagement in der Anlagenbildhierarchie 13 angepasst, d.h. für die ausgeblendete Referenz auf das Anlagenbild 2, 3, 4, 5, 6, wird auch keine dazugehörige Alarmanzeige angezeigt oder entlang der Hierarchie "verodert".

In FIG 4 ist ein Leitsystem 16 für die Bedienung und Beobachtung einer als Prozessanlage ausgebildeten technischen Anlage schematisch dargestellt. Das Leitsystem 16 umfasst einen Operator Station Client 17, einen Operator Station Server 18 und einen Engineering Station Server 19. Der Operator Station Server 18 und der Operator Station Client 17 sind über einen Terminalbus 19 miteinander und optional mit nicht dargestellten weiteren Komponenten des Leitsystems 16 wie einem Archivserver verbunden.

Ein Benutzer bzw. Operator kann zum Zwecke des Bedienens und Beobachtens über den Operator Station Client 17 mittels des Terminalbus 19 auf den Operator Station Server 18 zugreifen. Der Terminalbus 19 kann, ohne sich darauf zu beschränken, beispielsweise als Industrial Ethernet ausgebildet sein.

Der Operator Station Server 18 weist eine Geräteschnittstelle 20 auf, die mit einem Anlagenbus 21 verbunden ist. Über diese Geräteschnittstelle 14 kann der Operator Station Server 18 mit einem Automatisierungsgerät 22 sowie mit optional vorhandenen weiteren Komponenten der verfahrenstechnischen Anlage wie Peripheriegeräten 23, 24 kommunizieren. Der Anlagenbus 21 kann, ohne sich darauf zu beschränken, beispielsweise als Industrial Ethernet ausgebildet sein.

Auf dem Operator Station Server 18 sind (unter anderem) ein Visualisierungsdienst 25, ein Prozessabbild 26 und ein Konfigurationsspeicher 27 implementiert. Der in dem Operator Station Server 18 integrierte Visualisierungsdienst 25 initiiert eine Übertragung von Visualisierungsinformationen an den Operator Station Client 17. Der Operator Station Client 17 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 26 des Operator Station Servers 18 ist eine Momentaufnahme der (Signal-)Zustände von mit dem Operator Station Server 18 verbundenen Geräten und/oder Applikationen hinterlegt. Ein Alarmdienst 28 kann Alarmmeldungen aus dem Prozessabbild 26 auslesen und beispielsweise eine grafische Aggregation der Alarmmeldungen erzeugen, die der Operator Station Client 17 darstellen kann.

Ein Verfahren zum Betreiben des Leitsystems 16 kann wie folgt ablaufen: Zunächst legt ein Benutzer eines Projektierungswerkzeuges 29, welches auf dem Engineering Station Server 19 computerimplementiert ist, welche Referenzen auf Anlagenbilder 2, 3, 4, 5, 6, 15 in der Anlagenbildhierarchie 13 von dem Operator Station Client 17 visuell dargestellt werden sollen. Zusätzlich gibt der Benutzer vor, beim Vorliegen welcher Bedingung(en) die visuelle Darstellung einer Referenz unterbrochen werden soll. Diese Informationen werden (neben weiteren Informationen) von dem Engineering Station Server mittels eines Übersetzungsdienstes 30 kompiliert und in den Konfigurationsspeicher 27 auf dem Operator Station Server 18 übertragen.

Ein Anlagenbildhierarchiedienst 31, welcher auf dem Operator Station Server 18 computerimplementiert ist, liest die Informationen aus dem Konfigurationsspeicher 27 aus und prüft, ob Bedingungen für eine Unterbrechung der visuellen Darstellung einer Referenz erfüllt sind. Hierzu greift der Anlagenbildhierarchiedienst 31 auf das Prozessarchiv 26 und auf den Alarmdienst 28 zu.

Der Anlagenbildhierarchiedienst 31 überträgt daraufhin die Visualisierungsinformationen, die die Anlagenbildhierarchie 13 betreffen, an einen Anlagenbildhierarchiedienst 32, der auf dem Operator Station Client 17 computerimplementiert ist. Dieser wandelt die Visualisierungsinformationen in eine visuelle Darstellung derjenigen Referenzen (und Alarmanzeigen) auf Anlagenbilder um, die zu einem aktuellen Zeitpunkt dargestellt werden sollen. Wird von dem Anlagenbildhierarchiedienst 31 auf dem Operator Station Server 18 erkannt, dass eine Bedingung erfüllt ist, notifiziert sie umgehend den Anlagenbildhierarchiedienst 32 auf dem Operator Station Client 17, der die visuelle Darstellung der Anlagenbildhierarchie 32 unverzüglich anpasst.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (16) für eine technische Anlage, insbesondere Fertigungs- oder Prozessanlage, das dazu ausgebildet ist, wenigstens eine Referenz ("Bild_ÜbersichtAnlage", "Bild_ÜbersichtTeilanlage1", "Bild_Tank1", "Bild_ÜbersichtTeilanlage2" und "Bild_Tank2") auf ein Anlagenbild (2, 3, 4, 5, 6) visuell darzustellen, wobei das Anlagenbild (2, 3, 4, 5, 6) die technische Anlage oder einen Teil der technischen Anlage für ein Bedienen und Beobachten der technischen Anlage repräsentiert,
**dadurch gekennzeichnet, dass**
das Leitsystem (16) dazu ausgebildet ist, die visuelle Darstellung der Referenz ("Bild_ÜbersichtAnlage", "Bild_ÜbersichtTeilanlage1", "Bild_Tank1", "Bild_ÜbersichtTeilanlage2" und "Bild_Tank2") auf das Anlagenbild (2, 3, 4, 5, 6) in Abhängigkeit einer vorgebbaren Bedingung für den Fall, dass die Bedingung erfüllt ist, automatisiert zu unterbrechen.

2. Leitsystem (16) nach Anspruch 1, bei dem das Leitsystem (16) dazu ausgebildet ist, die visuelle Darstellung der Referenz ("Bild_ÜbersichtAnlage", "Bild_ÜbersichtTeilanlage1", "Bild-Tank1", "Bild_ÜbersichtTeilanlage2" und "Bild_Tank2") auf das Anlagenbild (2, 3, 4, 5, 6) und zusätzlich eine Referenz ("Bild_ÜbersichtAnlage", "Bild_ÜbersichtTeilanlage1", "Bild-Tank1", "Bild_ÜbersichtTeilanlage2" und "Bild_Tank2") auf wenigstens ein weiteres, mit dem Anlagenbild (2, 3, 4, 5, 6) in Verbindung stehendes Anlagenbild (2, 3, 4, 5, 6) zu unterbrechen.

3. Leitsystem (16) nach Anspruch 2, bei dem die Verbindung des wenigstens einen weiteren Anlagenbildes (2, 3, 4, 5, 6) zu dem Anlagenbild (2, 3, 4, 5, 6) eine hierarchische Unterordnung des weiteren Anlagenbildes (2, 3, 4, 5, 6) zu dem Anlagenbild (2, 3, 4, 5, 6) darstellt.

4. Leitsystem (16) nach Anspruch 3, bei dem die hierarchische Unterordnung des weiteren Anlagenbildes (2, 3, 4, 5, 6) aus einer verfahrenstechnischen Topologie der als verfahrenstechnische Anlage ausgebildeten technischen Anlage abgeleitet ist.

5. Leitsystem (16) nach einem der vorangegangenen Ansprüche, bei dem eine Bedingung das Über- oder Unterschreiten eines Schwellwertes eines Messwertes oder das Aufkommen einer Alarmmeldung in der technischen Anlage darstellt.

6. Leitsystem (16) nach einem der vorangegangenen Ansprüche, das dazu ausgebildet ist, zusätzlich zu der visuellen Darstellung der Referenz ("Bild_ÜbersichtAnlage", "Bild_ÜbersichtTeilanlage1", "Bild_Tank1", "Bild_ÜbersichtTeilanlage2" und "Bild_Tank2") auf das Anlagenbild (2, 3, 4, 5, 6) auch eine visuelle Darstellung weiterer, dem Anlagenbild (2, 3, 4, 5, 6) zugeordneter Elemente automatisiert zu unterbrechen.

7. Leitsystem (16) nach Anspruch 6, bei dem das weitere Element eine Alarmanzeige darstellt.

8. Leitsystem (16) nach einem der vorangegangenen Ansprüche, der einen Engineering Station Server (19) umfasst, durch den die Bedingung für die Unterbrechung der visuellen Darstellung im Rahmen einer Projektierung einer Automatisierung der technischen Anlage vorgebbar ist, und wobei das Leitsystem (16) einen Operator Station Server (18) zum Erzeugen von Visualisierungsinformationen für ein Bedienen und Beobachten der technischen Anlage auf Grundlage der von dem Engineering Station Server (19) empfangenen Projektierung aufweist, und wobei das Leitsystem (16) einen Operator Station Client (17) zur visuellen Darstellung der von dem Operator Station Server (18) erzeugten Visualisierungsinformationen aufweist.

9. Verfahren zum Betreiben eines Leitsystems (16) für eine technische Anlage, insbesondere Fertigungsanlage oder Prozessanlage, umfassend:
a) Vorgeben einer Bedingung,
b) Visuelle Darstellung einer Referenz ("Bild_ÜbersichtAnlage", "Bild_ÜbersichtTeilanlage1", "Bild-Tank1", "Bild_ÜbersichtTeilanlage2" und "Bild_Tank2") auf ein Anlagenbild (2, 3, 4, 5, 6) der technischen Anlage,
c) Für den Fall, dass die Bedingung erfüllt ist, automatisiertes Unterbrechen der visuellen Darstellung der Referenz ("Bild_ÜbersichtAnlage", "Bild_ÜbersichtTeilanlage1", "Bild-Tank1", "Bild_ÜbersichtTeilanlage2" und "Bild_Tank2") auf das Anlagenbild (2, 3, 4, 5, 6).

10. Verfahren nach Anspruch 9, bei dem zusammen mit der visuellen Darstellung der Referenz ("Bild_ÜbersichtAnlage", "Bild_ÜbersichtTeilanlage1", "Bild_Tank1", "Bild_ÜbersichtTeilanlage2" und "Bild_Tank2") auf das Anlagenbild (2, 3, 4, 5, 6) zusätzlich die visuelle Darstellung wenigstens einer Referenz ("Bild_ÜbersichtAnlage", "Bild_ÜbersichtTeilanlage1", "Bild_Tank1", "Bild_ÜbersichtTeilanlage2" und "Bild_Tank2") auf ein weiteres, mit dem Anlagenbild (2, 3, 4, 5, 6) in Verbindung stehendes Anlagenbild (2, 3, 4, 5, 6) unterbrochen wird.

11. Verfahren nach Anspruch 10, bei dem die Verbindung des wenigstens einen weiteren Anlagenbildes (2, 3, 4, 5, 6) zu dem Anlagenbild (2, 3, 4, 5, 6) eine hierarchische Unterordnung des weiteren Anlagenbildes (2, 3, 4, 5, 6) zu dem Anlagenbild (2, 3, 4, 5, 6) darstellt, wobei die hierarchische Unterordnung des weiteren Anlagenbildes (2, 3, 4, 5, 6) vorzugsweise aus einer verfahrenstechnischen Topologie der als verfahrenstechnische Anlage ausgebildeten technischen Anlage abgeleitet ist.

12. Verfahren nach einem der Ansprüche 9 bis 11, bei dem zusätzlich zu der visuellen Darstellung der Referenz ("Bild_ÜbersichtAnlage", "Bild_ÜbersichtTeilanlage1", "Bild-Tank1", "Bild_ÜbersichtTeilanlage2" und "Bild_Tank2") auf das Anlagenbild (2, 3, 4, 5, 6) auch eine visuelle Darstellung weiterer, dem Anlagenbild (2, 3, 4, 5, 6) zugeordneter Elemente automatisiert unterbrochen wird.

13. Verfahren nach einem der Ansprüche 9 bis 12, bei dem das weitere Element eine Alarmanzeige darstellt.

14. Verfahren nach einem der Ansprüche 9 bis 13, bei dem eine Bedingung das Über- oder Unterschreiten eines Schwellwertes eines Messwertes oder das Aufkommen einer Alarmmeldung in der technischen Anlage darstellt.

15. Verfahren nach einem der Ansprüche 9 bis 14, bei dem die Bedingung für die Unterbrechung der visuellen Darstellung im Rahmen einer Projektierung einer Automatisierung der technischen Anlage auf einem Engineering Station Server (19) des Leitsystems (16) vorgegeben wird, und bei dem ein Operator Station Server (18) des Leitsystems (16) Visualisierungsinformationen für ein Bedienen und Beobachten der technischen Anlage auf Grundlage der von dem Engineering Station Server (19) empfangenen Projektierung erzeugt, und bei dem ein Operator Station Client (17) des Leitsystems (16) die visuelle Darstellung der von dem Operator Station Server (18) erzeugten Visualisierungsinformationen vornimmt.
